# EUROPEAN PATENT SPECIFICATION

(11) **EP 2 595 358 B1**
(45) Date of publication and mention of the grant of the patent: **20.07.2016**
(21) Application number: 11009221.0
(22) Date of filing: 21.11.2011
(51) Int. Cl.: H04L 29/08, G06Q 30/06, H04W 4/00

(54) **Method and devices for ordering a product or service at a point of service**
Verfahren und Vorrichtungen zum Bestellen eines Produkts oder Dienstes an einem Point-of-Service
Procédé et dispositifs pour commander un produit ou un service dans un point de service

(43) Date of publication of application: 22.05.2013
(73) Proprietor: Swisscom AG, 3050 Bern (CH)
(72) Inventor: de Froment, Eric, 3014 Bern (CH)
(74) Representative: Rentsch Partner AG

(56) References cited:
- WO-A2-2007/149726
- GB-A- 2 386 235
- US-A1- 2004 214 597
- US-A1- 2005 102 233
- US-A1- 2009 228 325

## Description

### Field of the invention

The present invention relates to a method and devices for ordering a product or service at a point of service. Specifically, the present invention relates to a method and a mobile communication terminal for placing a personalized order for a product or service at a point of service.

### Background of the invention

While mobile communication terminals, particularly so called smart phones, have become convenient tools for accessing and retrieving media and news content via the Internet, their use at points of service or sale is still very limited. Although mobile communication terminals are typically configured for near field communication and would be perfectly suitable for performing commercial transactions, such as payment or ticketing transactions, at points of service or sale by interacting with local units at these points of service or sale, actual implementations of such transaction systems are presently quite rare. A reason for this rare application of mobile communication terminals at points of service or sale is the simple fact that merely replacing credit and debit cards with corresponding software applications on mobile communication terminals does not provide any significant advantages other than eliminating the need for such cards.

GB 2 386 235 is directed to providing consumers with more useful information and to generating a product recommendation using a bar code scanner. With a portable computing device, a user scans the bar code of a product. The bar code is transferred to a remote server. On the remote server, the bar code is matched to a specific product. Information about the specific product is accessed along with user's personal data and a product recommendation is produced and transferred back to the portable device. Recommendations are directed to compatibility with the user's medical or physical history, a dosage, a list of stores selling the product, and usage instructions. The bar code is associated with the product, an advertisement for the product, or in a catalogue from which products can be ordered.

US 2005/102233 is directed to an optical communication interface between a vending machine and a mobile communication device. The vending machine includes a display for displaying a unique ID (identification) and an URL (unified resource locator) of an associated server, for example in the form of a barcode. The mobile communication device includes a camera for capturing data displayed by the vending machine. The mobile communication device connects to the associated server, which authorizes the vending machine to accept selection of a product, wherein an account of the mobile communication device is billed. Vending machine product is shown in a product window, and is dispensed through a vending tray.

US 2009/228325 relates to just in time pickup or delivery of goods, services, appointments, or the like by a mobile customer. A user registers for the just in time services and provides preferences. For a given order, a merchant location is dynamically selected based on dynamically varying merchant conditions, based on a predicted time to the merchant location, and based on minimizing an estimated wait time to pickup the order. The order may be modified at any time before a locktime. The user receives an acknowledgment if the order is fulfilled by the selected merchant.

### Summary of the invention

It is an object of this invention to provide a method and devices for ordering a product or service at a point of service or sale. In particular, it is an object of the present invention to provide a method and a mobile communication terminal for placing a personalized order for a product or service at a point of service or sale.

According to the present invention, these objects are achieved through the features of the independent claims. In addition, further advantageous embodiments follow from the dependent claims and the description.

According to the present invention, the above-mentioned objects are particularly achieved in that for ordering a product or service at a point of service or sale (hereinafter point of service), a set of product or service parameters is received at a customer's personal mobile communication terminal from a local processing unit of the point of service. For example, the customer's mobile communication terminal is personalized by way of a subscriber identity module (SIM). The product or service parameters define various qualities and/or quantities of a specific product or service. For example, the product or service parameters include size and composition of a product, e.g. the ingredients and size of a beverage or a meal. The mobile communication terminal transmits at least some of the product or service parameters to a remote processing centre. In return, the mobile communication terminal receives personal customer preference values for the product or service parameters from the remote processing centre and transmits the personal customer preference values to the local processing unit, for placing a personalized order for a product or service at the point of service. The personal customer preference values indicate in each case the customer's preferred value for a specific product or service parameter, in the example above, the personal customer preference values indicate the preferred size and composition of a product, e.g. the preferred ingredients and size of a beverage or a meal. Retrieving personal customer preference values from the remote processing centre makes it possible to personalize efficiently an order for a product or service while keeping customer preference data secret from the point of service. Thus, data confidentiality is maintained for the customer, while personalized orders for the customer can be placed efficiently at a point of service.

In an embodiment, the mobile communication terminal captures at the point of service identification information for identifying the point of service. Subsequently, the mobile communication terminal transmits the identification information to the remote processing centre and, in return, receives from the remote processing centre access information assigned to the local processing unit. For example, the access information includes a network address and/or an access code for accessing the local processing unit of the point of service. Prior to receiving the set of product or service parameters, the mobile communication terminal accesses the local processing unit, using the received access information. Obtaining from the remote processing centre access information for the point of service makes it possible to access flexibly and dynamically the local processing unit of the point of service, without having to store or enter pre-defined access information in the mobile communication terminal.

Depending on the embodiment, the identification information is captured by receiving a product or service number through near field communication, reading a product or service number by way of a bar code reader, taking a photograph of a product or service visualization, determining geographical location information, receiving data entry of a uniform resource locator, and/or receiving selection instructions by way of a user interface.

In a further embodiment, the product or service parameters and the received personal customer preference values are displayed on the mobile communication terminal and overwriting values for the product or service parameters are received at the mobile communication terminal from the customer. Subsequently, the overwriting values are transmitted from the mobile communication terminal to the local processing unit for placing the personalized order. Accordingly, in addition to having the order personalized automatically based on the personal customer preference values obtained from the remote processing centre, the order may be further personalized dynamically by the user entering momentary preferences to overwrite one or more of his usual preference values.

In another embodiment, the mobile communication terminal receives from the local processing unit status information for the personalized order. Depending on the status information, the mobile communication terminal receives from the customer alternate order data for the personalized order and transmits the alternate order data to the local processing unit for altering the personalized order. Accordingly, the customer may not only track his order based on status information received from the local processing unit, e.g. periodically or on request, but he may also change or even cancel the order, depending on the current status of the order.

In addition to the method and mobile communication terminal for ordering a product or service at a point of service, the present invention also relates to a computer program product comprising computer program code for controlling one or more processors of a mobile communication terminal, preferably a computer program product comprising a tangible, non-transient computer-readable medium having stored the computer program code therein. The computer program code is configured to control the mobile communication terminal such that the mobile communication terminal performs the method for ordering a product or service at a point of service.

### Brief Description of the Drawings

The present invention will be explained in more detail, by way of example, with reference to the drawings in which:
Figure 1 shows a block diagram illustrating schematically a system for ordering a product or service at a point of service using a personal mobile communication terminal.
Figure 2 shows a timing diagram illustrating an exemplary sequence of steps for ordering a product or service at a point of service using a personal mobile communication terminal.

### Detailed Description of the Preferred Embodiments

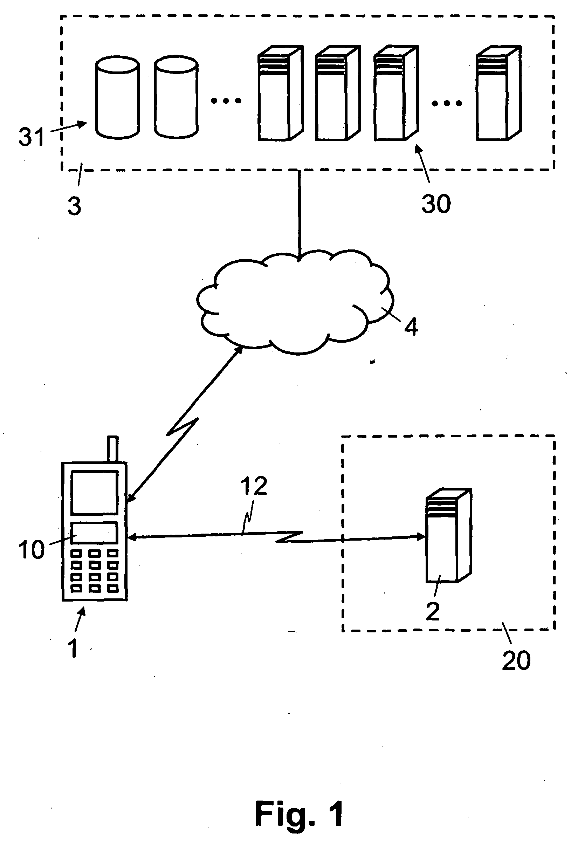

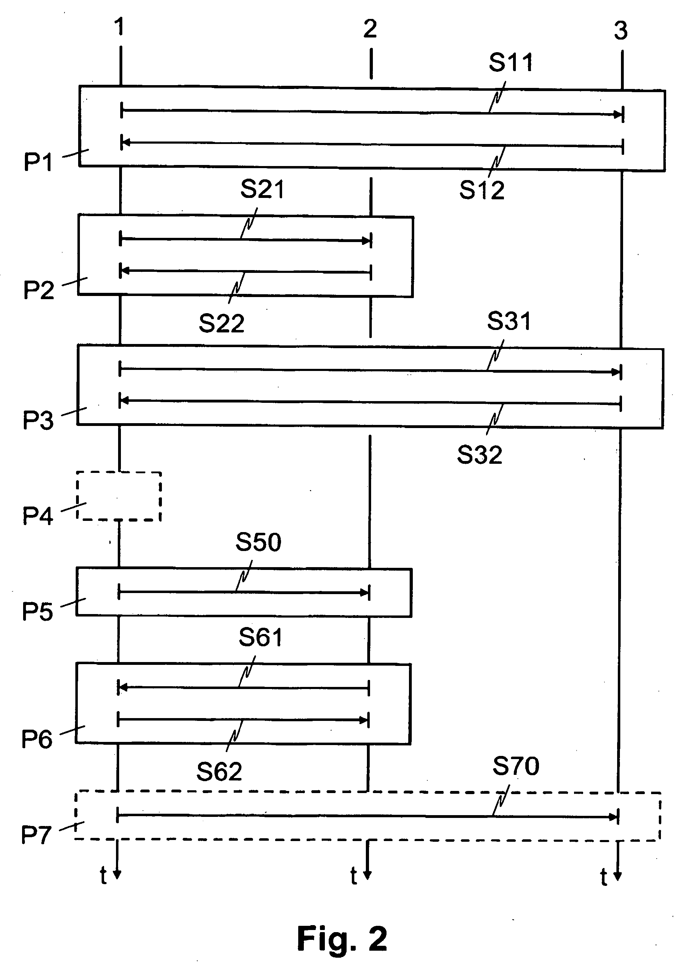

In Figures 1 and 2, reference numeral 1 refers to a mobile communication terminal, e.g. a mobile phone, a tablet computer, or another mobile computing device with communication capabilities; reference numeral 2 refers to a local processing unit at a point of service 20; and reference numeral 3 refers to a remote processing centre.

The mobile communication terminal 1 is configured to communicate with the remote processing centre 3 via a telecommunications network 4. Telecommunications network 4 includes a mobile radio network, e.g. a GSM network (Global System for Mobile communication), a UMTS network (Universal Mobile Telephone System) or another terrestrial or satellite-based mobile radio telephone system, and/or a wireless local area network (WLAN) for accessing the Internet. The mobile communication terminal 1 is further configured to communicate with the local processing unit 2 of the point of service 20 via communication channel 12. Depending on the embodiment, communication channel 12 is configured for short-range communications and includes a WLAN, a near field communication system, e.g. RFID (Radio Frequency Identification), a Bluetooth communication system, and/or another RF-based communication system. In an embodiment, communication channel 12 is established via telecommunications network 4.

As illustrated schematically in Figure 1, the mobile communication terminal 1 includes a display, data entry elements, e.g. one or more keys and/or a touch sensitive display, and an ordering module 10. The ordering module 10 is a functional module which is implemented preferably as a programmed software module, e.g. a so called app or applet, for controlling one or more processors of the mobile communication terminal 1. The computer program code of the ordering module 10 is stored on a computer readable medium which is connected removably or in a fixed fashion with the mobile communication terminal 1. One skilled in the art will understand, however, that in alternative embodiments, the ordering module 10 may be implemented fully or at least partly by way of hardware components. In a preferred embodiment, the mobile communication terminal 1 further includes a SIM (Subscriber Identity Module) having stored therein an identifier associated with its user, e.g. an IMSI (International Mobile Subscriber Identity). Alternative or additional user identification information, e.g. a customer identifier, may be stored as part of the ordering module 10, for example.

Depending on the embodiment, the point of service 20 includes one or more local processing units 2, each processing unit 2 may include one or more operable computers, each computer having one or more processors. One skilled in the art will understand that there are numerous architectures for organizing and interconnecting the local processing unit(s) 2 of a point of service 20. For example, local processing unit(s) 2 may be integrated in a dispenser or a vending machine, or a local processing unit 2 may be configured as a control unit of the point of service 20, e.g. connected to one or more dispensers, vending machines, cashier or ordering terminals, etc. For the purpose of this description, it is relevant only that the point of service 20 includes at least one local processing unit 2 configured to communicate with one or more mobile communication terminals 1 via communication channel 12. Depending on the embodiment, the one or more local processing units 2 are further configured to communicate via telecommunication network 4.

The remote processing centre 3 comprises one or more computers 30 and data stores 31 with personal customer preference values. The computers 30 may be assigned and dedicated to different processing steps. One skilled in the art will understand that the computers 30 of the remote processing centre 3 may actually be distributed geographically. The customer preference values stored in data stores 31 include for a specific user/customer, e.g. defined by an IMSI or another customer or user identifier, defined values for a variety of product or service parameters. As illustrated in Table 1, e.g. stored in data stores 31, the preferred value of a specific product or service parameter may further depend on situational criteria, such as weather conditions, temperature, annual season, geographical location, day of the week, time of day, etc.

**Table 1**

| Customer preference values | | | | |
|---|---|---|---|---|
| Customer identifier | Product or service parameter | Situational criteria | ... | Situational criteria |
| | | Preference value | ... | Preference value |
| | ... | | ... | ... |
| ... | ... | ... | ... | ... |
| Customer identifier | Product or service parameter | Situational criteria | ... | Situational criteria |
| | | Preference value | ... | Preference value |
| | ... | ... | ... | ... |

The product or service parameters include, for example, parameters defining the composition, size, cost, quality, and/or quantity of a product or service, for example the composition, size and quantity of a beverage and/or meal, e.g. a medium size cup of coffee with one portion of sugar but no cream, a small cup of non-sugared cola, a small serving of a mixed salad with French dressing, etc.

The customer preference values may include other parameters related to products or services, e.g. medical conditions such as food allergies or dietary requirements to be considered or preferred methods of payment, etc.

In the following paragraphs, an exemplary sequence of phases and steps for placing a personalized order for a product or service at a point of service 20, using a personal mobile communication terminal 1, is described with reference to Figure 2.

In phase P1, the mobile communication terminal 1 is used to capture at the point of service 20 identification information for identifying the point of service 20. Depending on the embodiment and application, there is a variety of different types and kinds of this identification information as well as different ways and methods to capture this identification information. For example, the identification information includes a product or service number which comprises a point of service (POS) identifier and is captured through near field communication or by reading a bar code or another visual code. Alternatively, the identification information includes a photograph taken of a product or service visualization, possibly in combination with geographical location information of the point of service, e.g. GPS coordinates (Global Positioning System) or base station (cell) identifiers. In another embodiment, the identification information comprises a URL (Uniform Resource Locator) or another product or service identifier including a POS identifier which is selected from a list or menu of a user interface of the ordering module 10, or entered into the mobile communication terminal 1 through a web browser or a message composer, e.g. an SMS generator (Short Messaging Services). In step S11, the captured identification information is transmitted by the ordering module 10 from the mobile communication terminal 1 via telecommunications network 4 to the remote processing centre 3. One skilled in the art will understand that there are other ways of capturing and transmitting the POS identification information to the remote processing centre 3. Based on the received POS identification information, the remote processing centre 3 or one of its computers 30 configured to process access information requests, respectively, determines access information for accessing the local processing unit 2 at the point of service 20, e.g. a network address and/or an access code assigned to the local processing unit 2. In step S12, the determined access information is transmitted from the remote processing centre 3 via telecommunications network 4 to the mobile communication terminal 1 where it is received by the ordering module 10.

In phase P2, the mobile communication terminal 1 initiates interaction with the local processing unit 2 of the point of service 20. Specifically, using the access information obtained in phase P1, in step S21, the ordering module 10 of the mobile communication terminal 1 establishes communication with the local processing unit 2, e.g. by establishing a connection or sending a product or service (selection) request via communication channel 12. Depending on the embodiment and/or the application, step S21 may include transmitting a product or service identifier from the mobile communication terminal 1 to the local processing unit 2, e.g. as determined in phase P1. In step S22, the local processing unit 2 transmits to the mobile communication terminal 1 a set of product or service parameters via communication channel 12. Each product or service parameter included in the set identifies a specific attribute of a product or service, e.g. a certain quality or quantity defining a characteristic feature of the service or product. For example, the set of product or service parameters are transmitted as part of an electronic form which is received by the ordering module 10.

In phase P3, the mobile communication terminal 1 obtains personal customer preference values from the remote processing centre 3. Accordingly, in step S31, the ordering module 10 transmits the set of product or service parameters, e.g. the electronic form, or at least some of these parameters, from the mobile communication terminal 1 via telecommunications network 4 to the remote processing centre 3. The remote processing centre 3 identifies the customer based on a customer or subscriber identifier, and determines from the data stores 31 the customer's personal preference values for the product or service parameters received in step S31, e.g. in the electronic form. Depending on the embodiment, the remote processing centre 3 takes into consideration current situation data, such as weather conditions, temperature, annual season, geographical location, day of the week, time of day, etc. which may influence the choice of customer preference values as defined by situational criteria associated with the specific product or service parameters. In step S32, the remote processing centre 3 transmits the determined personal customer preference values via telecommunications network 4 to the mobile communication terminal 1, e.g. filled into the electronic form, where it is received by the ordering module 10.

In optional phase P4, the preference values are further customized by the customer. For example, the customer preference values received from the remote processing centre 3 are displayed by the ordering module 10 on a display of the mobile communication terminal 1, e.g. as an electronic form, and the customer may overwrite any of the preference values for the product or service parameters.

In phase P5, a personalized order for the product or service is placed at the point of service 20 using the customer preference values. Specifically, in step S50, the ordering module 10 transmits, from the mobile communication terminal 1 via communication channel 12 to the local processing unit 2, an order request which includes the customer preference values for the product or service parameters. Alternatively, the actual order is generated by the local processing unit 2 based on customer preference values received from the mobile communication terminal 1.

In phase P6, order tracking is performed based on current status information related to the personalized order. For example, in step S61, the local processing unit 2 transmits the status information to the mobile communication terminal 1 via communication channel 12, e.g. periodically (push mode) or on request (pull mode), where it is received by the ordering module 10. The current status of the personalized order is shown by the ordering module 10 on a display of the communication terminal 1. In an embodiment, the customer is presented with options to cancel or change the order depending on the current status of the order. Accordingly, in step S62, altered order data is transmitted by the ordering module 10 from the mobile communication terminal 1 via communication channel 12 to the local processing unit 2.

In optional phase P7, feedback data is transmitted by the ordering module 10 from the mobile communication terminal 1 to the remote processing centre 3. The feedback data may include altered values of service or product parameters enabling the remote processing centre 3 to adapt the customer's personal preference values over time, should the customer have activated such an option.

In an exemplary further embodiment, the method of placing a personalized order for a product or service is extended to a point of service at a non-public, private location, e.g. the private residence (home) of a personal friend of the user of the mobile communication terminal 1. In this scenario, the communication channel 12 includes a WLAN or a Virtual Private Network (VPN), for example, enabling the mobile communication terminal 1 to access the local processing unit 2. For example, the local processing unit 2 comprises an xDSL router/gateway (Digital Subscriber Line) or a cable set top box. Through the communication channel 12, the user may establish a private session between his mobile communication terminal 1 and the local processing unit 2 while being present at the private residence or at a remote location. For example, the local processing unit 2 comprises a data store with music, video or other media content. Accordingly, in the set of product or service parameters, the local processing unit 2 transmits to the mobile communication terminal 1 via communication channel 12 characteristic features of the music, video or other media content. For example, the set of product or service parameters include various indices for characterizing the music, video or other media content, e.g. the type or style of music, the genre of video or movies, the era of music or video, actors, performers, musicians, composers, directors, or other characteristics of media content, e.g. technical characteristics such as format, codec, size, etc. Using the received set of product or service parameters, the mobile communication terminal 1 obtains the personal customer preference values for the music, video or other media content from the remote processing centre 3. The user of the mobile communication terminal 1 may further customize the customer preference values received from the remote processing centre 3, before they are transmitted via communication channel 12 to the local processing unit 2 for placing a personalized order for music, video or other media content with the local processing unit 2. Depending on the configuration or embodiment, the personalized order is executed by the local processing unit 2 rendering the corresponding music, video or other media content on a local rendering device at the private residence or by transmitting the music, video or other media content data to the mobile communication terminal 1.

It should be noted that, in the description, the computer program code has been associated with a specific functional module and the sequence of the steps has been presented in a specific order, one skilled in the art will understand, however, that the computer program code may be structured differently and that the order of at least some of the steps could be altered, without deviating from the scope of the invention.

## Claims

1. A method of ordering a product or service at a point of service (20), the method comprising:
receiving (S22) at a customer's personal mobile communication terminal (1) a set of product or service parameters from a local processing unit (2) of the point of service (20), the product or service parameters defining various qualities and/or
quantities of a specific product or service; transmitting (S31) at least some of the product or service parameters from the mobile communication terminal (1) to a remote processing centre (3);
receiving (S32) at the mobile communication terminal (1) personal customer preference values for the product or service parameters from the remote processing centre (3); and
transmitting (S50) the personal customer preference values from the mobile communication terminal (1) to the local processing unit (2), for placing a personalized order for a product or service at the point of service (20).

2. The method of claim 1, further comprising the mobile communication terminal (1) capturing at the point of service (20) identification information for identifying the point of service (20); transmitting (S1 1) the identification information from the mobile communication terminal (1) to the remote processing centre (3); receiving (S12) at the mobile communication terminal (1) from the remote processing centre (3) access information assigned to the local processing unit (2); and the mobile communication terminal (1) accessing (S21) the local processing unit (2) using the access information, prior to receiving (S22) the set of product or service parameters.

3. The method of claim 2, wherein capturing identification information comprises at least one of: receiving a product or service number through near field communication, reading a product or service number by way of a bar code reader, taking a photograph of a product or service visualization, determining geographical location information, receiving data entry of a uniform resource locator, and receiving selection instructions by way of a user interface.

4. The method of one of claims 1 to 3, further comprising displaying the product or service parameters and the personal customer preference values on the mobile communication terminal (1); receiving at the mobile communication terminal (1) overwriting values for the product or service parameters from the customer; and transmitting the overwriting values from the mobile communication terminal (1) to the local processing unit (2) for placing the personalized order.

5. The method of one of claims 1 to 4, further comprising receiving (S61) at the mobile communication terminal (1) from the local processing unit (2) status information for the personalized order; and, depending on the status information, receiving at the mobile communication terminal (1) alternate order data for the personalized order from the customer, and transmitting (S62) the alternate order data from the mobile communication terminal (1) to the local processing unit (2) for altering the personalized order.

6. A mobile communication terminal (1) comprising an ordering module (10) for ordering a product or service at a point of service (20), the ordering module (10) being configured to:
receive (S22) a-set of product or service parameters from a local processing unit (2) of the point of service (20), the product or service parameters defining various qualities and/or quantities of a specific product or service;
transmit (S31) at least some of the product or service parameters to a remote processing centre (3);
receive (S32) from the remote processing centre (3) personal customer preference values for the product or service parameters; and
transmit (S50) the personal customer preference values to the local processing unit (2), for placing a personalized order for a product or service at the point of service (20).

7. The mobile communication terminal (1) of claim 6, wherein the ordering module (10) is further configured to capture identification information for identifying the point of service (20), transmit (S11) the identification information to the remote processing centre (3), receive (S12) from the remote processing centre (3) access information assigned to the local processing unit (2), and access (S21) the local processing unit (2) using the access information, prior to receiving (S22) the set of product or service parameters.

8. The mobile communication terminal (1) of claim 7, wherein the ordering module (10) is further configured to capture the identification information by at least one of: receiving a product or service number through near field communication, reading a product or service number by way of a bar code reader, taking a photograph of a product or service visualization, determining geographical location information, receiving data entry of a uniform resource locator, and receiving selection instructions by way of a user interface.

9. The mobile communication terminal (1) of one of claims 6 to 8, wherein the ordering module (10) is further configured to display the product or service parameters and the personal customer preference values on the mobile communication terminal (1), receive overwriting values for the product or service parameters from the customer, and transmit the overwriting values to the local processing unit (2) fort placing the personalized order.

10. The mobile communication terminal (1) of one of claims 6 to 9, wherein the ordering module (1O) is further configured to receive (S61) from the local processing unit (2) status information for the personalized order; and, depending on the status information, receive alternate order data for the personalized order from the customer, and transmit (S62) the alternate order data to the local processing unit (2) for altering the personalized order.

11. A computer program product comprising a computer readable medium having stored thereon computer program code which directs a mobile communication terminal(1) to:
receive (S22) a set of product or service parameters from a local processing unit (2) of the point of service (20), the product or service parameters defining various qualities and/or quantities of a specific product or service;
transmit (S31) at least some of the product or service parameters to a remote processing centre (3);
receive (S32) from the remote processing centre (3) personal customer preference values for the product or service parameters; and
transmit (S50) the personal customer preference values to the local processing unit (2), for placing a personalized order for a product or service at the point of service (20).

12. The computer program product of claim 11, further comprising computer program code which directs the mobile communication terminal (1) to capture identification information for identifying the point of service (20), transmit (S11) the identification information to the remote processing centre (3), receive (S12) from the remote processing centre (3) access information assigned to the local processing unit (2), and access (S21) the local processing unit (2) using the access information, prior (S22) to receiving the set of product or service parameters.

13. The computer program product of claim 12, further comprising computer program code which directs the mobile communication terminal (1) to capture the identification information by at least one of: receiving a product or service number through near field communication, reading a product or service number by way of a bar code reader, taking a photograph of a product or service visualization, determining geographical location information, receiving data entry of a uniform resource locator, and receiving selection instructions by way of a user interface.

14. The computer program product of one of claims 11 to 13, further comprising computer program code which directs the mobilen communication terminal (1) to display the product or service parameters and the personal customer preference values on the mobile communication terminal (1), receive overwriting values for the product or service parameters from the customer, and transmit the overwriting values to the local processing unit (2) for placing the personalized order.

15. The computer program product of one of claims 11 to 14, further comprising computer program code which directs the mobile communication terminal (1)to receive (S61) from the local processing unit (2) status information for the personalized order; and, depending on the status information, receive alternate order data for the personalized order from the customer, and transmit (S62) the alternate order data to the local processing unit (2) for altering the personalized order.

## Patentansprüche

1. Verfahren zum Bestellen eines Produkts oder Dienstes an einem Point-of-Service (20), wobei das Verfahren Folgendes umfasst:
Empfangen (S22) einer Menge von Produkt- oder Dienstparametern an einem persönlichen mobilen Kommunikationsendgerät (1) eines Kunden von einer lokalen Verarbeitungseinheit (2) des Point-of-Service (20), wobei die Produkt- oder Dienstparameter verschiedene Qualitäten und/oder Quantitäten eines speziellen Produkts oder Dienstes definieren;
Übertragen (S31) mindestens einiger der Produkt- oder Dienstparameter vom mobilen Kommunikationsendgerät (1) an ein entferntes Verarbeitungszentrum (3);
Empfangen (S32) persönlicher Kundenpräferenzwerte für die Produkt- oder Dienstparameter am mobilen Kommunikationsendgerät (1) vom entfernten Verarbeitungszentrum (3); und
Übertragen (S50) der persönlichen Kundenpräferenzwerte vom mobilen Kommunikationsendgerät (1) an die lokale Verarbeitungseinheit (2) zum Aufgeben einer personalisierten Bestellung eines Produkts oder Dienstes am Point-of-Service (20).

2. Verfahren nach Anspruch 1, das ferner Folgendes umfasst: Erfassen von Identifizierungsinformationen zum Identifizieren des Point-of-Service (20) durch das mobile Kommunikationsendgerät (1) am Point-of-Service (20); Übertragen (S11) der Identifizierungsinformationen vom mobilen Kommunikationsendgerät: (1) an das entfernte Verarbeitungszentrum (3); Empfangen (S12) von Zugriffsinformationen, die der lokalen Verarbeitungseinheit (2) zugewiesen sind, am mobilen Kommunikationsendgerät (1) vom entfernten Verarbeitungszentrum (3); und Zugreifen (S21) auf die lokale Verarbeitungseinheit (2) durch das mobile Kommunikationsendgerät (1) unter Verwendung der Zugriffsinformationen vor dem Empfangen (S22) der Menge von Produkt- oder Dienstparametern.

3. Verfahren nach Anspruch 2, wobei das Erfassen von Identifizierungsinformationen Folgendes umfasst:
Empfangen einer Produkt- oder Dienstnummer durch Nahfeldkommunikation und/oder Lesen einer Produkt- oder Dienstnummer mittels eines Strichcodelesers und/oder Erstellen einer Fotografie einer Produkt- oder Dienstansicht und/oder Ermitteln von Informationen zum geografischen Standort und/oder Empfangen einer Dateneingabe eines Uniform Resource Locator und/oder Empfangen von Auswahlbefehlen mittels einer Benutzerschnittstelle.

4. Verfahren nach einem der Ansprüche 1 bis 3, das ferner Folgendes umfasst: Anzeigen der Produkt- oder Dienstparameter und der persönlichen Kundenpräferenzwerte auf dem mobilen Kommunikationsendgerät (1); Empfangen von Überschreibungswerten für die Produkt- oder Dienstparameter am mobilen Kommunikationsendgerät (1) vom Kunden; und Übertragen der Überschreibungswerte vom mobilen Kommunikationsendgerät (1) an die lokale Verarbeitungseinheit (2) zum Aufgeben der personal.is.ierten Bestellung.

5. Verfahren nach einem der Ansprüche 1 bis 4, das ferner Folgendes umfasst: Empfangen (S61) von Statusinformationen für die personalisierte Bestellung am mobilen Kommunikationsendgerät (1) von der lokalen Verarbeitungseinheit (2); und abhängig von den Statusinformationen Empfangen alternativer Bestellungsdaten für die personalisierte Bestellung am mobilen Kommunikationsendgerät (1) vom Kunden und Übertragen (S62) der alternativen Bestellungsdaten vom mobilen Kommunikationsendgerät (1) an die lokale Verarbeitungseinheit (2) zum Verändern der personalisierten Bestellung.

6. Mobiles Kommunikationsendgerät (1), das ein Bestellungsmodul (10) zum Bestellen eines Produkts oder Dienstes an einem Point-of-Service (20) umfasst, wobei das Bestellungsmodul (10) konfiguriert ist, um:
eine Menge von Produkt- oder Dienstparametern von einer lokalen Verarbeitungseinheit (2) des Point-of-Service (20) zu empfangen (S22), wobei die Produkt- oder Dienstparameter verschiedene Qualitäten und/oder Quantitäten eines speziellen Produkts oder Dienstes definieren;
mindestens einige der Produkt- oder Dienstparameter an ein entferntes Verarbeitungszentrum (3) zu übertragen (S31) ;
persönliche Kundenpräferenzwerte für die Produkt- oder Dienstparameter vom entfernten Verarbeitungszentrum (3) zu empfangen (S32); und
die persönlichen Kundenpräferenzwerte an die lokale Verarbeitungseinheit (2) zum Aufgeben einer personalisierten Bestellung eines Produkts oder Dienstes am Point-of-Service (20) zu übertragen (S50).

7. Mobiles Kommunikationsendgerät (1) nach Anspruch 6, wobei das Bestellungsmodul (10) ferner konfiguriert ist, um Identifizierungsinformationen zum Identifizieren des Point-of-Service (20) zu erfassen, die Identifizierungsinformationen an das entfernte Verarbeitungszentrum (3) zu übertragen (S11), Zugriffsinformationen, die der lokalen Verarbeitungseinheit (2) zugewiesen sind, vom entfernten Verarbeitungszentrum (3) zu empfangen (S12) und auf die lokale Verarbeitungseinheit (2) unter Verwendung der Zugriffsinformationen vor dem Empfangen (S22) der Menge von Produkt- oder Dienstparametern zuzugreifen (S21).

8. Mobiles Kommunikationsendgerät (1) nach Anspruch 7. wobei das Bestellungsmodul (10) ferner konfiguriert ist, um die Identifizierungsinformationen durch Folgendes zu erfassen: Empfangen einer Produkt- oder Dienstnummer durch Nahfeldkommunikation und/oder Lesen einer Produkt- oder Dienstnummer mittels eines Strichcodelesers und/oder Erstellen einer Fotografie einer Produkt- oder Dienstansicht und/oder Ermitteln von Informationen zum geografischen Standort und/oder Empfangen einer Dateneingabe eines Uniform Resource Locator und/oder Empfangen von Auswahlbefehlen mittels einer Benutzerschnittstelle.

9. Mobiles Kommunikationsendgerät (1) nach einem der Ansprüche 6 bis 8, wobei das Bestellungsmodul (10) ferner konfiguriert ist, um die Produkt- oder Dienstparameter und die persönlichen Kundenpräferenzwerte auf dem mobilen Kommunikationsendgerät (1) anzuzeigen, Überschreibungswerte für die Produkt- oder Dienstparameter vom Kunden zu empfangen und die Überschreibungswerte an die lokale Verarbeitungseinheit (2) zum Aufgeben der personalisierten Bestellung zu übertragen.

10. Mobiles Kommunikationsendgerät (1) nach einem der Ansprüche 6 bis 9, wobei das Bestellungsmodul (10) ferner konfiguriert ist, um Statusinformationen für die personalisierte Bestellung von der lokalen Verarbeitungseinheit (2) zu empfangen (S61); und abhängig von den Statusinformationen alternative Bestellungsdaten für die personalisierte Bestellung vom Kunden zu empfangen und die alternativen Bestellungsdaten an die lokale Verarbeitungseinheit (2) zum Verändern der personalisierten Bestellung zu übertragen (S62).

11. Computerprogrammprodukt, das ein computerlesbares Medium mit darauf gespeichertem Computerprogrammcode umfasst, der ein mobiles Kommunikationsendgerät (1) anweist,
eine Menge von Produkt- oder Dienstparametern von einer lokalen Verarbeitungseinheit (2) des Point-of-Service (20) zu empfangen (S22), wobei die Produkt- oder Dienstparameter verschiedene Qualitäten und/oder Quantitäten eines speziellen Produkts oder Dienstes definieren;
mindestens einige der Produkt- oder Dienstparameter an ein entferntes Verarbeitungszentrum (3) zu übertragen (S31);
persönliche Kundenpräferenzwerte für die Produkt- oder Dienstparameter vom entfernten Verarbeitungszentrum (3) zu empfangen (S32); und
die persönlichen Kundenpräferenzwerte an die lokale Verarbeitungseinheit (2) zum Aufgeben einer personalisierten Bestellung eines Produkts oder Dienstes am Point-of-Service (20) zu übertragen (S50).

12. Computerprogrammprodukt nach Anspruch 11, das ferner Computerprogrammcode umfasst, der das mobile Kommunikationsendgerät (1) anweist, Identifizierungsinformationen zum Identifizieren des Point-of-Service (20) zu erfassen, die Identifizierungsinformationen an das entfernte Verarbeitungszentrum (3) zu übertragen (soll), Zugriffsinformationen, die der lokalen Verarbeitungseinheit (2) zugewiesen sind, vom entfernten Verarbeitungszentrum (3) zu empfangen (S12) und auf die lokale Verarbeitungseinheit (2) unter Verwendung der Zugriffsinformationen vor dem Empfangen (S22) der Menge von Produkt- oder Dienstparametern zuzugreifen (S21).

13. Computerprogrammprodukt nach Anspruch 12, das ferner Computerprogrammcode umfasst, der das mobile Kommunikationsendgerät (1) anweist, die Identifizierungsinformationen durch Folgendes zu erfassen: Empfangen einer Produkt- oder Dienstnummer durch Nahfeldkommunikation und/oder Lesen einer Produkt- oder Dienstnummer mittels eines Strichcodelesers und/oder Erstellen einer Fotografie einer Produkt- oder Dienstansicht und/oder Ermitteln von Informationen zum geografischen Standort und/oder Empfangen einer Dateneingabe eines Uniform Resource Locator und/oder Empfangen von Auswahlbefehlen mittels einer Benutzerschnittstelle.

14. Computerprogrammprodukt nach einem der Ansprüche 11 bis 13, das ferner Computerprogrammcode umfasst, der das mobile Kommunikationsendgerät (1) anweist, die Produkt- oder Dienstparameter und die persönlichen Kundenpräferenzwerte auf dem mobilen Kommunikationsendgerät (1) anzuzeigen, Überschreibungswerte für die Produkt- oder Dienstparameter vom Kunden zu empfangen und die Überschreibungswerte an die lokale Verarbeitungseinheit (2) zum Aufgeben der personalisierten Bestellung zu übertragen.

15. Computerprogrammprodukt nach einem der Ansprüche 11 bis 14, das ferner Computerprogrammcode umfasst, der das mobile Kommunikationsendgerät (1) anweist, Statusintormationen für die personalisierte Bestellung von der lokalen Verarbeitungseinheit (2) zu empfangen (S61); und abhängig von den Statusinformationen alternative Bestellungsdaten für die personalisierte Bestellung vom Kunden zu empfangen und die alternativen Bestellungsdaten an die lokale Verarbeitungseinheit (2) zum Verändern der personalisierten Bestellung zu übertragen (S62).

## Revendications

1. Procédé de commande d'un produit ou d'un service à un point de service (20), le procédé comprenant :
la réception (S22), au niveau d'un terminal de communication mobile personnel (1) d'un client, d'un jeu de paramètres de produit ou de service depuis une unité de traitement locale (2) du point de service (20), les paramètres de produit ou de service définissant diverses qualités et/ou quantités d'un produit ou service particulier ; la transmission (S31) d'au moins certains des paramètres de produit ou de service du terminal de communication mobile (1) à un centre de traitement distant (3) ;
la réception (S32), au niveau du terminal de communication mobile (1), de valeurs de préférences personnelles du client pour les paramètres de produit ou de service depuis le centre de traitement distant (3) ; et
la transmission (S50) des valeurs de préférences personnelles du client du terminal de communication mobile (1) à l'unité de traitement locale (2) permettant le passage d'une commande personnalisée d'un produit ou d'un service au point de service (20).

2. Procédé selon la revendication 1, comprenant en outre la capture, par le terminal de communication mobile (1) au point de service (20), d'informations d'identification permettant l'identification du point de service (20) ; à transmission (811) des informations d'identification du terminal de communication mobile (1) au centre de traitement distant (3) ; la réception (S12), au niveau du terminal de communication mobile (1) depuis le centre de traitement distant (3), d'informations d'accès assignées à l'unité de traitement locale (2) ; et l'accès (S21), par le terminal de communication mobile (1), à l'unité de traitement locale (2) à l'aide des informations d'accès, préalablement à la réception (S22) du jeu de paramètres de produit ou de service.

3. Procédé selon la revendication 2, dans lequel la capture d'informations d'identification comprend au moins une des opérations suivantes : la réception d'un numéro de produit ou de service par communication en champ proche, la lecture d'un numéro de produit ou de service au moyen d'un lecteur de code à barres, la prise d'une photographie d'une visualisation de produit ou de service, la détermination d'informations de localisation géographique, réception d'une entrée de données d'un localisateur uniforme de ressources, et la réception d'instructions de sélection au moyen d'une interface-utilisateur.

4. Procédé selon l'une des revendications 1 à 3, comprenant en outre l'affichage des paramètres de produit ou de service et des valeurs de préférences personnelles du client sur le terminal de communication mobile (1) ; la réception, au niveau du terminal de communication mobile (1), de valeurs de remplacement par réécriture pour les paramètres de produit ou de service depuis le client ; et la transmission des valeurs de remplacement par réécriture du terminal de communication mobile (1) à l'unité de traitement locale (2) pour le passage de la commande personnalisée.

5. Procédé selon l'une des revendications 1 à 4, comprenant en outre la réception (S61), au niveau du terminal de communication mobile (1) depuis l'unité de traitement locale (2), d'informations d'état pour la commande personnalisée ; et, en fonction des informations d'état, la réception, au niveau du terminal de communication mobile (1), de données de commande de substitution pour la commande personnalisée depuis le client, et la transmission (S62) des données de commande de substitution du terminal de communication mobile (1) à l'unité de traitement locale (2) pour la modification de la commande personnalisée.

6. Terminal de communication (1) comprenant un module de commande (10) permettant de commander un produit ou un service à un point de service (20), le module de commande (10) étant configuré pour :
recevoir (S22) un jeu de paramètres de produit ou de service depuis une unité de traitement locale (2) du point de service (20), les paramètres de produit ou de service définissant diverses qualités et/ou quantités d'un produit ou service particulier ;
transmettre (S31) au moins certains des paramètres de produit ou de service à un centre de traitement distant (3) ;
recevoir (S32), depuis le centre de traitement distant (3), des valeurs de préférences personnelles d'un client pour les paramètres de produit ou de service ; et
transmettre (S50) les valeurs de préférences personnelles du client à l'unité de traitement locale (2) pour passer une commande personnalisée d'un produit ou d'un service au point de service (20).

7. Terminal de communication mobile (1) selon la revendication 6, dans lequel le module de commande (10) est configuré en outre pour capturer des informations d'identification permettant l'identification du point de service (20), transmettre (S11) les informations d'identification au centre de traitement distant (3), recevoir (S12), depuis le centre de traitement distant (3), des informations d'accès assignées à l'unité de traitement locale (2), et accéder (S21) à l'unité de traitement locale (2) à l'aide des informations d'accès, avant de recevoir (S22) le jeu de paramètres de produit ou de service.

8. Terminal de communication mobile (1) selon la revendication 7, dans lequel le module de commande (10) est configuré en outre pour capturer les informations d'identification par au moins une des opérations suivantes consistant à : recevoir un numéro de produit ou de service par communication en champ proche, lire un numéro de produit ou de service au moyen d'un lecteur de code à barres, prendre une photographie d'une visualisation de produit ou de service, déterminer des informations de localisation géographique, recevoir une entrée de données d'un localisateur uniforme de ressources, et recevoir des instructions de sélection au moyen d'une interface-utilisateur.

9. Terminal de communication mobile (1) selon l'une des revendications 6 à 8, dans lequel le module de commande (10) est configuré en outre pour afficher les paramètres de produit ou de service et les valeurs de préférences personnelles du client sur le terminal de communication mobile (1), recevoir des valeurs de remplacement par réécriture pour les paramètres de produit ou de service depuis le client, et transmettre les valeurs de remplacement par réécriture à l'unité de traitement locale (2) pour passer la commande personnalisée.

10. Terminal de communication mobile (1) selon l'une des revendications 6 à 9, dans lequel le module de commande (10) est configuré en outre pour recevoir (S61) depuis l'unité de traitement locale (2) des informations d'état pour la commande personnalisée; et, en fonction des informations d'état, recevoir des données de commande de substitution pour la commande personnalisée depuis le client, et transmettre (S62) les données de commande de substitution à l'unité de traitement locale (2) pour modifier la commande personnalisée.

11. Produit-programme d'ordinateur comprenant un support lisible par ordinateur sur lequel est enregistré un code de programme d'ordinateur donnant pour instruction à un terminal de communication mobile (1) de :
recevoir (S22) un jeu de paramètres de produit ou de service depuis une unité de traitement locale (2) du point de service (20), les paramètres de produit ou de service définissant diverses qualités et/ou quantités d'un produit ou service particulier ;
transmettre (S31) au moins certains des paramètres de produit ou de service à un centre de traitement distant (3) ;
recevoir (S32), depuis le centre de traitement distant (3), des valeurs de préférences personnelles d'un client pour les paramètres de produit ou de service ; et
transmettre (S50) les valeurs de préférences personnelles du client à l'unité de traitement locale (2) pour passer une commande personnalisée d'un produit ou d'un service au point de service (20).

12. Produit-programme d'ordinateur selon la revendication 11, comprenant en outre un code de programme d'ordinateur donnant pour instruction au terminal de communication mobile (1) de capturer des informations d'identification permettant l'identification du point de service (20), transmettre (S11) les informations d'identification au centre de traitement distant (3), recevoir (S12), depuis le centre de traitement distant (3), des informations d'accès assignées à l'unité de traitement locale (2), et accéder (S21) à l'unité de traitement locale (2) à l'aide des informations d'accès, avant de recevoir (S22) le jeu de paramètres de produit ou de service.

13. froduit-programnne d'ordinateur selon la revendication 12, comprenant en outre un code de programme d'ordinateur donnant pour instruction au terminal de communication mobile (1) de capturer les informations d'identification par au moins une des opérations suivantes consistant à : recevoir un numéro de produit ou de service par communication en champ proche, lire un numéro de produit ou de service au moyen d'un lecteur de code à barres, prendre une photographie d'une visualisation de produit ou de service, déterminer des informations de localisation géographique, recevoir une entrée de données d'un localisateur uniforme de ressources, et recevoir des instructions de sélection au moyen d'une interface-utilisateur.

14. Produit-programme d'ordinateur selon l'une des revendications 11 à 13, comprenant en outre un code de programme d'ordinateur donnant pour instruction au terminal de communication mobile (1) d'afficher les paramètres de produit ou de service et les valeurs de préférences personnelles du client sur le terminal de communication mobile (1), recevoir des valeurs de remplacement par réécriture pour les paramètres de produit ou de service depuis le client, et transmettre les valeurs de remplacement par réécriture à l'unité de traitement locale (2) pour passer la commande personnalisée.

15. Produit-programme d'ordinateur selon l'une des revendications 11 à 14, comprenant en outre un code de programme d'ordinateur donnant pour instruction au terminal de communication mobile (1) de recevoir (S61) depuis l'unité de traitement locale (2) des informations d'état pour la commande personnalisée ; et, en fonction des informations d'état, recevoir des données de commande de substitution pour la commande personnalisée depuis le client, et transmettre (S62) les données de commande de substitution à l'unité de traitement locale (2) pour modifier la commande personnalisée.
